Europäisches Patentamt

European Patent Office

Office européen des brevets

(19)

(11) Numéro de publication: **0 354 075**
**A1**

(12)

# DEMANDE DE BREVET EUROPEEN

(21) Numéro de dépôt: **89401790.4**

(22) Date de dépôt: **23.06.89**

(51) Int. Cl.⁵: **G 01 S 13/74**

(30) Priorité: **05.08.88 FR 8810609**

(43) Date de publication de la demande:
**07.02.90 Bulletin 90/06**

(84) Etats contractants désignés: **ES GR**

(71) Demandeur: **THOMSON-CSF**
**51, Esplanade du Général de Gaulle**
**F-92800 Puteaux (FR)**

(72) Inventeur: **Defranould, Philippe**
**THOMSON-CSF SCPI**
**F-92045 Paris la Défense Cédex 67 (GT)**

**Poncot, Claude**
**THOMSON-CSF SCPI**
**F-92045 Paris la Défense Cédex 67 (GT)**

(74) Mandataire: **Desperrier, Jean-Louis et al**
**THOMSON-CSF SCPI**
**F-92045 PARIS LA DEFENSE CEDEX 67 (FR)**

(54) **Procédé d'identification passive à distance, et dispositif pour la mise en oeuvre de ce procédé.**

(57) L'invention concerne les procédés pour identifier à distance les objets que l'on souhaite protéger contre le vol.

Elle consiste à noyer dans un ciment (104) à l'intérieur d'une cavité (102) creusée dans l'objet à protéger (101) un répondeur passif utilisant une ligne à retard (105) à ondes acoustiques de cisaillement. L'action du ciment sur la ligne modifie de manière aléatoire la réponse de celle-ci. La forme de la cavité empêche de retirer le répondeur sans briser le ciment et donc sans modifier la signature du répondeur.

Elle permet de protéger les collections d'un musée.

FIG.1

EP 0 354 075 A1

Bundesdruckerei Berlin

**Description**

**Procédé d'identification passive à distance et dispositif pour la mise en oeuvre de ce procédé**

La présente invention se rapporte à un procédé d'identification par interrogation à distance fonctionnant de manière entièrement passive sans aucun apport d'énergie locale. Un tel procédé permet d'identifier un objet que l'on désire protéger contre le vol, une oeuvre d'art dans un musée par exemple, et l'interrogation à distance, à la sortie du musée par exemple, permet de déclencher une alarme.

L'identification et la protection des objets précieux est difficile, aussi bien pour les collectionneurs que pour les musées : si les objets les plus célèbres sont parfaitement identifiés et peuvent être reconnus après un vol, beaucoup d'objets "précieux" ne sont pas facilement identifiables.

Pour lutter contre le vol de tels objets, il est connu de placer à l'intérieur de ces objets des inserts métalliques de forme unique et déterminée à l'avance pour chaque oeuvre, qui permettent leur identification. La lecture se fait aux rayons X. On forme une image aux rayons X de l'insert. Les bosses et les creux sont alors comparés à la référence.

Ceci présente deux inconvénients :
- il faut placer l'illuminateur X et la caméra juste en face de l'insert, ce qui est une opération lente et qui ne permet pas un inventaire rapide ni une détection à la sortie du musée;
- pour un escroc équipé, il est facile de lire le code de l'insert et de le reproduire soit pour authentifier un faux, soit pour cacher un vrai.

Il est également connu du brevet US 4 059 831, inventeur Max EPSTEIN, déposant NORTHWESTERN UNIVERSITY, de réaliser un dispositif, parfois appelé étiquette passive, en utilisant un dispositif à ondes de surface relié à une antenne radioélectrique. Celle-ci sert à la fois à alimenter le dispositif à ondes de surface et à émettre un code déterminé par ce dernier.

Un tel dispositif à ondes de surface comporte sur un substrat piézoélectrique, par exemple en niobate de lithium, au moins deux transducteurs en forme de peignes interdigités qui sont gravés dans une couche conductrice. L'un au moins des peignes est formé d'un ensemble de transducteurs élémentaires pondérés chacun par un poids $A_i$ et apportant chacun un retard $t_i$. On obtient ainsi un code de l'onde acoustique qui circule à la surface du substrat entre les deux transducteurs. Ce code est tel que, si $h(t)$ est la réponse impulsionnelle d'un transducteur élémentaire, la réponse impulsionnelle $s(t)$ du composant est de la forme :
$s(t) = \Sigma_i A_i h (t-t_i)$
Dans les réalisations les plus simples, les poids $A_i$ ont pour valeur + 1,0 ou -1 et la complexité du code est obtenue par un nombre important de retards élémentaires, par exemple 16 ou 32.

Les deux transducteurs d'entrée et de sortie sont reliés à des antennes électromagnétiques, ou éventuellement à une antenne commune.

Un émetteur récepteur d'ondes radioélectriques sert d'interrogateur de ce dispositif. Pour cela il émet une impulsion de faible durée par rapport à $h(t)$ et à $t_i$. Ce signal est reçu par l'antenne et vient donc exciter au moins l'un des transducteurs en donnant naissance à une onde de surface. Cette onde de surface est reçue par l'autre transducteur qui délivre un signal égal à $s(t)$ en raison du codage apporté par le transducteur codé. Ce signal $s(t)$ est réémis par l'antenne à laquelle est relié le transducteur de sortie, puis reçu par l'interrogateur. A l'intérieur de l'interrogateur des circuits électroniques d'analyse permettent de déterminer si le signal reçu est bien de la forme $s(t)$, et dans ce cas déclenchent une alarme.

L'interrogateur doit émettre avec une puissance suffisante afin d'obtenir un signal suffisamment fort en réponse à l'inter rogation, ce qui entraîne la réception d'un grand nombre d'échos directs de l'onde électromagnétique. Toutefois, du fait de la très grande différence de vitesse entre les ondes électromagnétiques et les ondes acoustiques de surface, le retard apporté par le dispositif d'identification est beaucoup plus long que celui des échos directs et ceux-ci ne peuvent pas brouiller la réponse du dispositif.

Entre autres avantages ce procédé permet une interrogation à distance et il est entièrement passif.

Le signal $h(t)$ étant relativement court, son énergie est assez faible et l'énergie du signal reçu par l'interrogateur est encore plus faible. Pour améliorer le rapport signal/bruit on peut alors avoir recours à un traitement cohérent bien connu dans la technique du traitement du signal. Ce procédé consiste à émettre un signal relativement long modulé linéairement en fréquence, connu sous le nom anglo-saxon de "chirp". Le signal réémis par le dispositif correspond au produit de convolution de $s(t)$ avec le chirp. En procédant dans l'interrogateur à un traitement connu, comportant entre autres une nouvelle convolution avec le chirp et une transformée de Fourier inverse, on retrouve le signal $s(t)$ mais avec un gain en rapport signal/bruit égal à BT, où B est la bande passante du chirp et T sa durée. Pour B = 20 MHz et T = 10 ms par exemple, le gain est de 53 dB, ce qui est considérable.

Dans une variante décrite dans le brevet US 4 096 477, Max EPSTEIN propose de remplacer le dispositif à ondes de surface par un dispositif à ondes de volume de cisaillement, connues sous le nom anglo-saxon de "shear bulk waves". Celles-ci se propagent dans la masse d'un substrat piézoélectrique en étant émises depuis la surface de celui-ci selon un angle d'émission déterminé à partir d'un peigne interdigité gravé sur cette surface.

Pour permettre d'identifier de manière inviolable les objets à protéger, l'invention propose de sceller dans ces objets un répondeur comportant un dispositif à ondes de volume, de telle manière que le matériau de scellement vienne modifier aléatoirement les caractéristiques de ce dispositif et qu'il ne soit pas possible d'extraire le répondeur sans modifier ces caractéristiques.

D'autres particularités et avantages de l'invention apparaîtront clairement dans la description suivante faite en regard des figures annexées qui représentent :

- la figure 1, une vue en coupe d'un objet à protéger comprenant un répondeur selon l'invention

- la figure 2, la signature d'un répondeur avant et après son scellement dans un objet à protéger

- la figure 3, une vue en coupe d'un autre mode de réalisation de l'invention

- les figures 4, 5, des variantes de réalisation du répondeur de la figure 3 et

- la figure 6, une variante du mode de réalisation de la figure 3, comportant deux répondeurs.

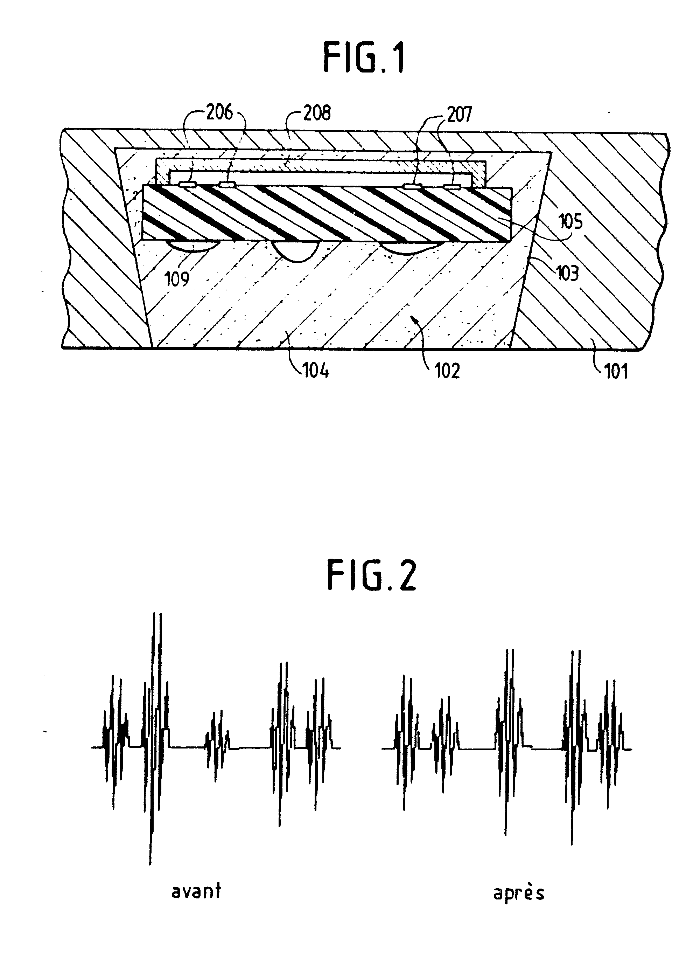

On a représenté sur la figure 1 un objet 101 à protéger contre le vol.

On a ménagé dans cet objet une cavité 102 dont les parois latérales 103 sont inclinées pour s'évaser vers l'intérieur de la cavité. De cette manière lorsque l'on remplit cette cavité avec un produit de scellement 104, un ciment par exemple, il est impossible d'extraire celui-ci d'un seul bloc, même s'il n'adhère pas aux parois de la cavité, et il faut briser ce produit pour extraire le contenu de la cavité.

On a placé à l'intérieur de cette cavité un dispositif répondeur comportant une ligne à retard à ondes de volume de cisaillement. Ce dispositif est scellé par le ciment 104. Cette ligne comprend un substrat piézoélectrique 105 sur la face supérieure duquel on a gravé des transducteurs 106 et 107 comprenant des électrodes en forme de peignes interdigités. Chacun de ces transducteurs est relié à une antenne, non représentée sur la figure, formée par exemple d'une simple boucle de fil noyée dans le ciment 104. Un capot 108 permet de protéger les transducteurs afin que le ciment ne les empêche pas d'exciter le substrat.

Le pas entre les électrodes est p. Ces transducteurs sont de même nature que ceux qui permettent de générer des ondes de surface. Cependant, le choix de la période est ici différent pour permettre de générer des ondes de volume, dans une direction θ par rapport à la normale. Si k est le nombre d'onde, k = 2©/λ, λ est la longueur d'onde. La direction de départ des ondes acoustiques générées par le transducteur est

$$\sin\theta = \lambda / p \quad (1)$$

Les ondes émises dans cette direction se réfléchissent suivant les lois de la réflexion avec le plus souvent réémission de plusieurs ondes de polarisations différentes. Les ondes qui sont recueillies sur le transducteur de sortie sont donc de nature complexe et sont constituées d'un grand nombre d'échos de retards différents. Si f(t) la réponse impulsionnelle de cette ligne à retard, l'amplitude des échos, et donc f(t), dépend de façon cruciale de la réflexion sur la face inférieure (et également sur les autres faces).

Quand on scelle le répondeur dans la cavité, le ciment vient se coller de manière irrégulière et aléatoire sur celui-ci, en particulier sur sa face inférieure où subsistent des poches d'air telles que 109.

Ceci modifie de manière aléatoire les réflexions des ondes acoustiques, et donc la réponse impulsionnelle du dispositif qui devient s(t). Cette réponse est la signature du répondeur, et donc de l'objet dans lequel il est inséré.

La figure 2 représente un exemple de la signature d'un répondeur particulier, avant et après scellement. On constate que les différences sont importantes et ne permettent pas de confusion entre les deux.

D'après la formule(1) pour des traits de 1μm la fréquence de la signature se situe largement dans la gamme du GHZ. Ceci est un autre avantage de l'utilisation de ce type d'onde car il est plus facile de travailler à haute fréquence, avec une largeur de trait encore très commode et courante pour la photogravure.

Lecture à distance se fait par interrogation électromagnétique à l'aide d'un interrogateur. Celui-ci comprend un émetteur d'ondes radio hyperfréquences qui envoie une impulsion électromagnétique de durée courte devant le premier retard acoustique de la ligne à retard. Ce signal est reçu par l'une au moins des antennes reliées aux transducteurs 106 et 107 et transformé en ondes acoustiques. Ces ondes acoustiques excitent au moins le transducteur relié à l'autre antenne et celle-ci réémet un signal électromagnétique qui est reçu par l'interrogateur. En fait, comme le système est passif et que les réflexions sont multiples, les deux antennes reçoivent et émettent les signaux, mais ceci ne change pas la nature du phénomène et son explication.

Un signal très atténué mais ayant la forme représentée sur la figure 2 est reçu par le récepteur de l'interrogateur. La signature est ainsi lue à distance grâce à deux effets :
- la piézoélectricité qui a permis la transformation électrique -acoustique
- le retard dû à la lenteur de la propagation des ondes acoustiques comparées aux ondes électromagnétiques. En effet, les retards acoustiques sont si longs qu'ils ne peuvent être confondus avec un quelconque écho électromagnétique.

Dans ce mode de fonctionnement, le signal est très atténué et risque de disparaître derrière le bruit. Pour surmonter cet inconvénient, on utilisera de préférence la technique d'interrogation par un "chirp" décrite plus haut. Avec un chirp durant 10ms et une signature durant quelques μs, on peut obtenir un gain de 30 à 40dB sur le rapport signal à bruit, ce qui est considérable et permet une lecture aisée dans la plupart des cas. On peut d'ailleurs améliorer encore les choses si l'on se contente d'une lecture encore plus lente.

Comme la signature n'est pas connue d'avance, on peut se demander de quelle manière un interrogateur détectera le signal en retour. Pour surmonter cette difficulté on utilise une méthode d'étalonnage dans laquelle on fait interroger le dispositif par l'interrogateur et on analyse par des circuits appropriés la réponse individuelle du dispositif interrogé. Cette réponse est alors mise en mémoire dans l'interrogateur et est utilisée ultérieurement pour la reconnaissance du dispositif en fonctionnement opérationnel.

L'invention s'étend aux autres dispositifs où le scellement du répondeur amène une variation aléatoire de la signature.

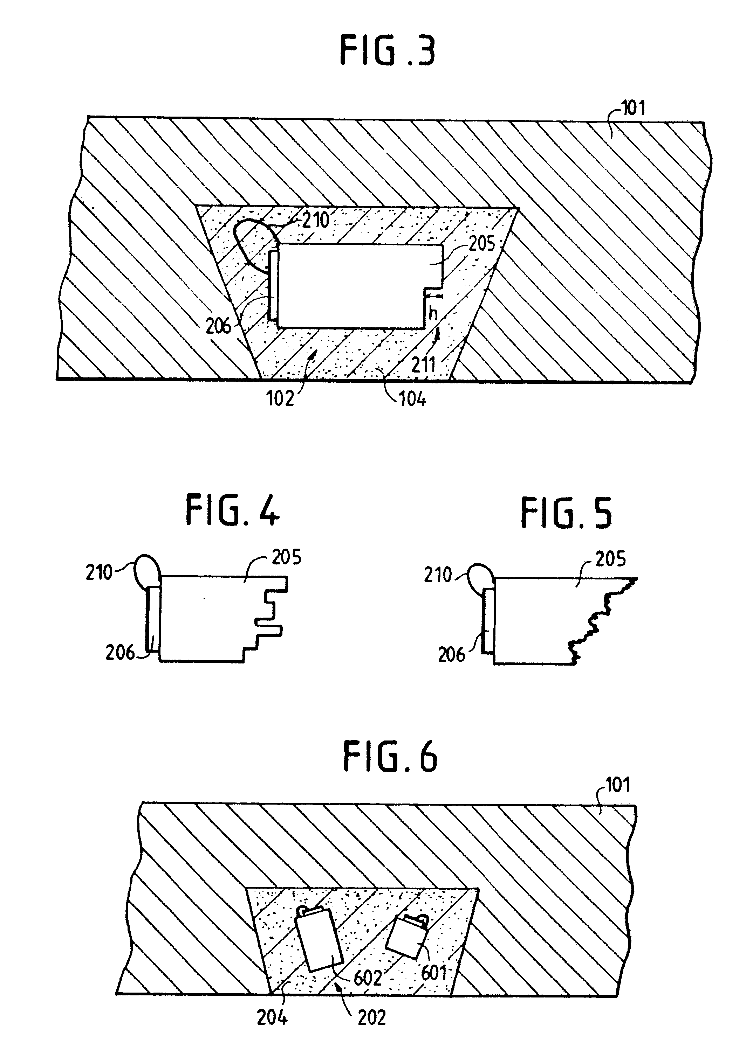

On peut ainsi utiliser, comme représenté sur la figure 3, une ligne à retard à ondes de volume de compression comprenant un corps massif 205 muni à une extrémité d'un transducteur 206 relié à une antenne 210. L'autre extrémité est usinée selon une marche 211 de hauteur h sensiblement égale à $\lambda$ /8.

Avant scellement l'amplitude des échos est nulle pour ceux d'ordre pair. Après scellement la modification des coefficients de réflexion des deux faces entraîne une modification des amplitudes des échos de manière non reproductible.

A titre de variante, on peut usiner la face réflectrice du corps 205 selon d'autres reliefs, soit déterminé comme dans la figure 4, soit aléatoire (corrugations obtenues par sablage par exemple) comme dans la figure 5. On peut utiliser toutes les variantes prévues dans la demande de brevet n° 88 089459 déposée le 12 juillet 1988 au nom de la Demanderesse sous le titre "Dispositif et procédé d'identification passif interrogeable à distance".

Il est aussi possible d'utiliser, comme représenté en figure 6, plusieurs dispositifs scellés dans une même cavité. Dans ce cas la mise en oeuvre est particulièrement simple si l'on utilise des lignes à retard à ondes de volume de compression sans aucun usinage particulier.

Enfin lorsque l'on utilise un dispositif à ondes de volume de cisaillement, comme dans la figure 1, on peut coder, selon une méthode connue, au moins l'un des transducteurs. Le précodage ainsi obtenu est ensuite modifié par le scellement, ce qui procure une double sécurité.

## Revendications

1. Procédé d'identification passive à distance, dans lequel un objet à identifier est muni d'un répondeur passif comprenant une ligne à retard acoustique (105), caractérisé en ce que ce répondeur est fixé à l'objet avec un matériau de fixation (104) qui modifie de manière non reproductible les caractéristiques de la ligne à retard (105), et en ce que la réponse du répondeur après scellement est mise en mémoire.

2. Procédé selon la revendication 1, caractérisé en ce que le matériau de fixation (104) est un ciment qui adhère de manière irrégulière à la ligne à retard (105).

3. Procédé selon l'une quelconque des revendications 1 et 2, caractérisé en ce que la ligne à retard (105) est une ligne à retard à ondes de volume de compression (205).

4. Procédé selon l'une quelconque des revendications 1 et 2, caractérisé en ce que l'on utilise dans la ligne à retard des ondes de volume de cisaillement.

5. Procédé selon l'une quelconque des revendications 1 à 4, caractérisé en ce que l'on scelle le répondeur dans une cavité (102) ménagée dans l'objet.

6. Procédé selon la revendication 5, caractérisé en ce que les parois latérales (103) de la cavité sont inclinées pour s 'évaser vers l'intérieur de la cavité.

7. Procédé selon l'une quelconque des revendications 1 à 6, caractérisé en ce que l'on utilise au moins deux répondeurs (601, 602).

8. Dispositif répondeur passif comprenant une ligne à retard acoustique (105) à insérer dans un objet à identifier pour son identification passive à distance, caractérisé en ce que la ligne à retard est nue sur au moins une partie de sa surface de sorte qu'un matériau de scellement de ce dispositif à l'intérieur d'une cavité prévue à cet effet dans l'objet modifie de manière non reproductible mais définitive les caractéristiques de la ligne à retard.

9. Dispositif selon la revendication 8, caractérisé en ce que la ligne à retard (105) est une ligne à retard à ondes de volume de cisaillement.

10. Dispositif selon la revendication 9, caractérisé en ce que la ligne à retard comprend un substrat piézoélectrique (105) comportant sur sa surface libre des transducteurs comportant des électrodes en forme de peignes indentés.

11. Dispositif selon l'une quelconque des revendications 8 à 10, caractérisé en ce que la ligne à retard (105) comprend au moins un transducteur (106) codé selon un code déterminé.

EP 0 354 075 A1

# FIG.1

# FIG.2

avant                    après

# FIG .3

# FIG. 4

# FIG. 5

# FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 017 533 (THOMSON-CSF) <br> * Page 3, ligne 14 - page 4, ligne 19; figure 1 * <br> --- | 1,8 | G 01 S 13/74 |
| A | DE-A-1 909 816 (LICENTIA) <br> * Page 4, ligne 1 - page 6, ligne 8; figures 1,2 * <br> --- | 1,8 | |
| A | PATENT ABSTRACTS OF JAPAN, vol. 10, no. 121 (E-401)[2178], 7 mai 1986, page 103 E 401; & JP-A-60 254 811 (MATSUSHITA DENKI SANGYO K.K.) 16-12-1985 <br> * Résumé * <br> --- | 1,8 | |
| A,D | US-A-4 096 477 (M. EPSTEIN et al.) <br> * Résumé; colonne 4, ligne 46 - colonne 5, ligne 65; figures 6,7 * <br> --- | 1,4,8,9 ,11 | |
| A | US-A-3 568 104 (F.M. BAILEY) <br> * Résumé; figures 1,2 * <br> --- | 3 | DOMAINES TECHNIQUES RECHERCHES (Int. Cl.5) |
| P,X | EP-A-0 305 308 (C. TAFANI) <br> * Colonne 6, ligne 9 - colonne 8, ligne 8; figures 3,4 * <br> --- | 1,2,8 | G 01 S <br> G 08 B <br> G 07 C <br> G 06 K |
| A | US-A-4 688 026 (J.R. SCRIBNER et al.) <br> * Colonne 2, lignes 52-63 * <br> ----- | 1 | |

Le présent rapport a été établi pour toutes les revendications

| Lieu de la recherche | Date d'achèvement de la recherche | Examinateur |
|---|---|---|
| LA HAYE | 16-10-1989 | VAN WEEL E.J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P0402)